(19) Europäisches Patentamt

European Patent Office

Office européen des brevets

(11) **EP 2 582 033 A2**

(12) **EUROPEAN PATENT APPLICATION**

(43) Date of publication:
**17.04.2013 Bulletin 2013/16**

(51) Int Cl.:
**H02M 7/797** *(2006.01)*

(21) Application number: **12187670.0**

(22) Date of filing: **08.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.10.2011 US 201113270887**

(71) Applicant: **Hamilton Sundstrand Corporation Windsor Locks, CT 06096-1010 (US)**

(72) Inventors:
• **Sagona, John Duward
  Poplar Grove, IL 61065 (US)**
• **Fattal, Souren G.
  Palatine, IL 60067 (US)**
• **Wilhide, Matthew L.
  Cherry Valley, IL 61016 (US)**
• **Courtney, Christopher J.
  Janesville, WI 53545 (US)**

(74) Representative: **Hughes, Andrea Michelle
Dehns
St Bride's House
10 Salisbury Square
London EC4Y 8JD (GB)**

(54) **Control for a multi-level active rectifier**

(57)    The present invention is a control architecture (10) for an active rectifier (12). The control (10) monitors the AC input voltage ($V_{a,b,c}$) provided to the active rectifier at a sampling rate grater than the frequency of the AC input voltage and calculates, in response, a phase estimate associated with the monitored AC input voltage that is updated with each new sample of the AC input voltage.

Based on the phase and frequency estimates, along with monitoring of the AC input current ($i_{a,b,c}$) and DC output voltage ($V_{c1,c2}$), the control architecture calculates voltage commands that are used to generate the pulse-width modulation (PWM) control signals ($V_{s1,s2,s3}$) for provision to solid-state switching devices ($S_{1,2,3}$) in the active rectifier (12).

Fig. 1

EP 2 582 033 A2

**Description**

BACKGROUND

The present invention is related to active rectifiers, and in particular to control architectures for active rectifiers.
In contrast with passive rectifiers that rely on diodes to rectify an alternating current (AC) input to a direct current (DC) output, active rectifiers employ solid-state switching devices that are selectively turned On and Off to convert an AC input to a DC output. Operation of the active rectifier is controlled by a controller that generates control signals provided to each of the plurality of solid-state switching devices within the active rectifier. Benefits of the active rectifier include the ability to regulate the output voltage of the active rectifier, reduce current harmonics and provide improved power factor correction.
The performance of the active rectifier relies, in part, on the ability of the controller to accurately determine the phase and frequency of the AC input voltage. For example, power factor correction relies on shaping the AC input current drawn by the active rectifier to be in-phase with the AC input voltage. It is therefore important to be able to accurately measure the phase (i.e., position) of the AC input voltage.

SUMMARY

The present invention is a control architecture for a three-level active rectifier. The control architecture monitors the AC input voltage provided to the active rectifier at a sampling rate grater than the frequency of the AC input voltage and calculates, in response, a phase estimate associated with the monitored AC input voltage that is updated with each new sample of the AC input voltage. Based on the phase and frequency estimates, along with monitoring of the AC input current and DC output voltage, the control architecture calculates voltage commands that are used to generate the pulse-width modulation (PWM) controls signals for provision to solid-state switching devices in the active rectifier.

BRIEF DESCRIPTION OF THE DRAWINGS

FIG. 1 is a block diagram of an active rectifier system according to an embodiment of the present invention.
FIG. 2 is a block diagram illustrating functions performed by a phase/frequency detector according to an embodiment of the present invention.

DETAILED DESCRIPTION

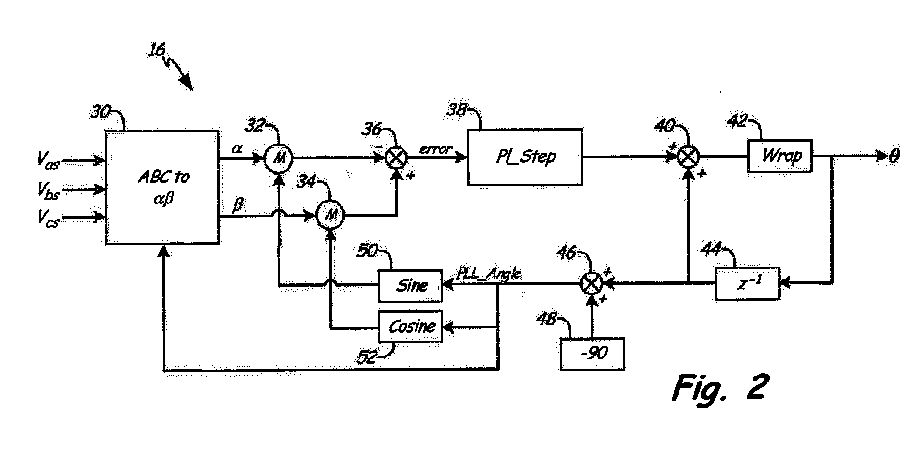

The control architecture of the present invention controls the operation of a multi-level rectifier by sampling the AC input at a sampling frequency significantly higher than the frequency of the AC input voltage. This higher sampling rate minimizes the error in the calculated phase and frequency. Calculation of pulse width modulation (PWM) control signals generated by the control architecture can be synchronized with calculated phase information such that each calculation of PWM control signals is based on a most recent update of calculated phase information. With improved phase information, the control architecture is able to reduce harmonics, which provide improved power factor correction that in turn improves power quality and reduces the electromagnetic interference (EMI) associated with the active rectifier.

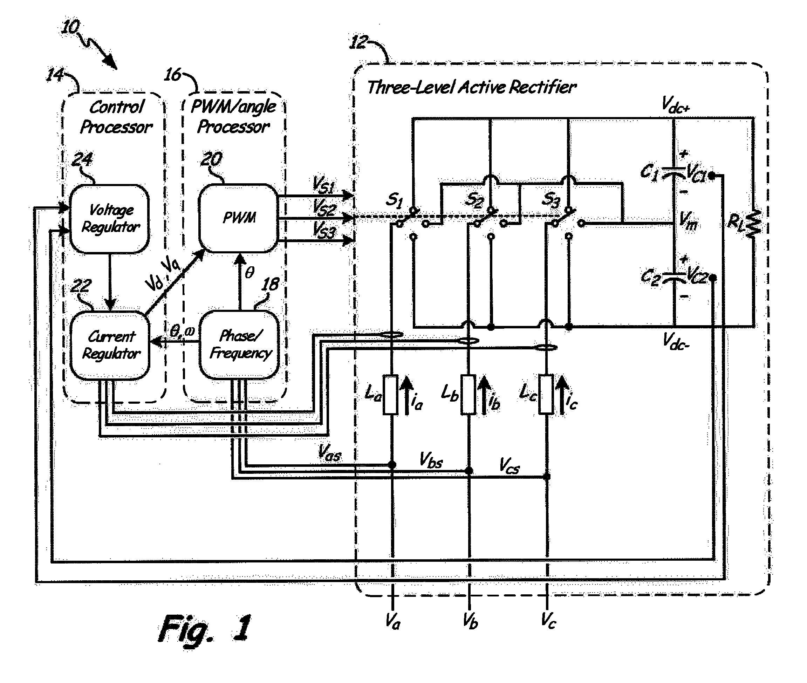

FIG. 1 is a block diagram of active rectifier system 10 according to an embodiment of the present invention. In the embodiment shown in FIG. 1, active rectifier system 10 includes active rectifier 12 and a control architecture that includes two co-processors, control processor 14, and PWM/angle processor 16. In other embodiments, the functions performed by control processor 14 and PWM/angle processor 16 may be performed by a single processor.
In the embodiment shown in FIG. 1, active rectifier 12 is a multi-level active rectifier that converts a three-phase alternating current (AC) input labeled Vas, Vbs, Vcs to a multi-level DC output that includes a positive DC voltage (Vdc+), a negative DC voltage (Vdc-), and a midpoint voltage (Vm). Active rectifier 12 includes inductive filters La, Lb, Lc, DC link capacitors C1, C2, and a plurality of solid-state switching devices illustrated here for the sake of simplicity as single-pole, multiple-throw switches S1, S2, S3 that selectively connect each phase of AC input to one of the plurality of DC outputs. In actuality, each switch S1, S2, S3 would be comprised of a plurality of solid-state switches configured to provide an AC input to one of the plurality of DC outputs (e.g., Vdc+, Vdc-, Vm).
In the embodiment shown in FIG. 1, PWM/angle processor 16 includes phase/frequency detector 18 and pulse width modulator (PWM) 20. Phase/frequency detector 18 monitors the AC input voltage Vas, Vbs, Vcs supplied to active rectifier 12 and calculates based on the monitored AC input phase and frequency information (labeled "0" and "ω", respectively). Phase/frequency processor 16 samples the AC input voltage Vas, Vbs, Vcs at a frequency much greater than the frequency of the AC input voltage (e.g., ten times greater), and in one embodiment at a frequency greater than the operating frequency of switches S1-S3. In one embodiment, the sampling rate is selected based on the particular power quality requirements of an application. In the embodiment shown in FIG. 1, the increased sampling of the AC input voltage is provided by dedicated PWM/angle processor 16, which may be implemented as a stand-alone processor, a field-programmable gate array (FPGA), or digital signal processor (DSP). As described in more detail with respect to FIG. 2, PWM/angle processor 16 employs a phase lock loop (PLL) to generate phase information θ and frequency information ω.

In the embodiment shown in FIG. 1, PWM 20 employs phase information 0 to convert voltage commands (e.g., *Vq, Yd*) provided by current regulator 22 from a two-phase *dq* reference frame to a three-phase *abc* reference frame (e.g., Vs1, Vs2, Vs3, representing PWM duty cycle command signals provided to switches S1, S2, and S3). In one embodiment, calculation of duty cycle information by PWM 20 is synchronized with updated phase information provided by phase/frequency detector 18, such that each PWM calculation is made with a most recent estimate of phase information θ from phase/frequency detector 18. By placing PWM 20 and phase/frequency detector 18 in the same processor, PWM 20 is able to retrieve without significant delay the most recent phase information θ calculated by phase/frequency detector 18. This does not mean that the update rate of phase/frequency detector 18 and update rate of PWM 20 must be the same. The update rate of each may be selected independent of the update rate of the other to meet the desired EMI performance and power quality performance for a particular application.

In the embodiment shown in FIG. 1, a second co-processor is employed in conjunction with PWM/angle processor 16. Control processor 14 includes current regulator 22 and voltage regulator 24. Voltage regulator 24 monitors the DC output voltages Vc1, Vc2 provided across capacitors C1 and C2, respectively. In the embodiment shown in FIG. 1, voltage regulator 24 receives the monitored DC output voltages Vc1, Vc2, and compares the monitored voltages to a desired or reference DC output voltage. The difference or error between the monitored DC output voltages and the desired DC output voltage is provided as an input to current regulator 22, which selectively increases or decreases the current command provided to PWM 20 based on the received error.

Current regulator 22 monitors the AC currents ia, ib, ic provided to active rectifier 12, and receives phase information θ and frequency information ω provided by phase/frequency detector 18. Current regulator 22 provides power factor correction by monitoring current ia, ib, ic supplied to active rectifier 12, and generating control signals provided to PWM 20 to control the DC output voltage (based on the input provided by voltage regulator 24) and to ensure that the monitored currents ia, ib, ic are in-phase with the monitored voltage as indicated by the phase and frequency information provided by phase/frequency detector 18. In particular, phase information θ is employed by current regulator 22 to transform the monitored currents from the three-phase *abc* reference frame to a two-phase *dq* reference frame. Frequency information ω is employed by current regulator 22 to decouple the *dq* phase currents as part of the *dq* proportional-integral (P-I) control loops provided within current regulator 22. In response to these inputs, current regulator 22 calculates duty cycle voltage commands (provided with respect to the two-phase *dq* reference frame, *Vq, Yd*) for provision to PWM 20. Improved accuracy of phase information θ provided by phase/frequency detector 18 improves the power factor correction provided by current regulator 22, thereby reducing the EMI associated with active rectifier 12.

As discussed above, pulse width modulator (PWM) 20 receives duty cycle command instructions (*Yq, Yd*) from current regulator 22, and in response generates PWM signals that are supplied to each of the plurality of solid-state switching devices S1, S2, S3 included within active rectifier 12. The conversion of duty cycle command instructions *Vq, Yd* from the two-phase *dq* reference frame to the three-phase *abc* reference frame *Ys1, Vs2, Vs3* is based, in part, on the accuracy of the phase information θ provided by phase/frequency detector 18. By improving the accuracy of phase information θ, the magnitude of current harmonics (e.g., 2nd, 3rd, 4th, etc.) is reduced. Minimizing the current harmonics results in improved power quality, which in turn, improves EMI performance of active rectifier 12.

As discussed above, the update rate or frequency of PWM 20 does not need to be the same as the update rate or frequency of phase/frequency detector 18. However, PWM 20 may be synchronized with phase/frequency detector 18 to ensure that each duty cycle command instruction calculated by PWM 20 is based on a most recent estimate of position. For example, the sample rate or update rate of phase/frequency detector may be some multiple of the update rate of PWM 20, such that phase/frequency detector 18 is synchronized with PWM 20, yet the update or sample rate of each may be selected independent of one another. In this way, the sampling frequency employed by phase/frequency detector 18 and the PWM frequency employed by PWM 20 can be selected independent of one another to meet the desired EMI and power quality requirements of a particular application.

FIG. 2 is a block diagram of functions performed by phase/frequency detector 18 according to an embodiment of the present invention to detect the position (i.e., phase θ) of the monitored AC input voltages Vas, Vbs, Vcs. The functions illustrated in FIG. 2 implement a phase-lock loop system, in which the phase θ provided by phase/frequency processor 16 is updated with each sample of the monitored input.

In the embodiment shown in FIG. 2, the monitored AC input voltage (represented here as monitored voltage sense signals Vas, Vbs, Vcs) are converted from a three-phase reference frame (abc) to a two-phase reference frame (αβ) by abc-αβ transform 30. Multiplier block 32 multiplies the signal α by the sine of the phase-lock loop angle *PLL_angle,* which represents the most recent phase estimate. Likewise, multiplier block 34 multiplies the signal β by the cosine of the phase-lock look angle *PLL_angle.* The outputs of multiplier blocks 32 and 34 are compared by difference block 36 to calculate a difference or error between the signals that represents the difference between the current phase estimate and the phase indicated by the monitored AC input voltages Vas, Vbs, Vcs. The functions performed in calculating the error between the current phase estimate and the phase of the monitored AC input voltage in the embodiment shown in FIG. 2 can be represented mathematically by the following equation:

$$\sin(x - y) = \sin(x) * \cos(y) - \cos(x) * \sin(y) \qquad \text{Equation 1}$$

where x = phase of the monitored AC voltage; and
y = current phase estimate.

As discussed above, the phase of the monitored AC input voltage when converted from the abc reference frame to the $\alpha\beta$ reference frame is related to the phase of the AC input voltage (e.g., $\alpha$ = Va, $\beta$ = 0.57735*(Vb-Vc)). Equation 1 is based on the assumption that the sampling rate is great enough that phase advancement between the current phase estimate and the phase of the monitored AC input voltage is relatively small (i.e., $x \approx y$).

The calculated error between the monitored AC input and the current phase estimate is provided to proportional-integral (PI) controller 38 to generate an output that acts to drive the difference between the monitored error to zero. The output of PI controller 36 is combined with the current position estimate $\theta$ at summer block 40 to generate a new position estimate $\theta$. Wrapping block 42 provides wrapping (if necessary) of the new position estimate if it extends beyond a desired range (i.e., wraps the estimate back around within a desired range, e.g., 0-360 degrees), and provides the new position estimate $\theta$ to control processor 14.

The new position estimate $\theta$ is also provided in feedback to correct subsequent estimates of the monitored position. The position estimate $\theta$ is held in memory by block 44 so that this value may be used in the next software cycle by summer block 40. In addition, summer block 46 adds an offset 48 of -90 degrees to align the phase of the software algorithm with the hardware sensors. The resultant phase-lock loop signal (PLL_angle) is provided to sine function 50 and cosine function 52 to generate sine and cosine wave functions based on the new position estimate. The embodiment shown in FIG. 2 represents one such implementation of a phase-lock loop circuit used to estimate position of a signal and update estimates a signal based on subsequent measurements.

In one embodiment, the sample rate (i.e., the rate at which AC voltages are sampled) is much greater than the frequency of the AC input voltage (e.g., 100 times greater than the AC input frequency). In this way, the phase estimate $\theta$ provided to control processor 14 is continuously updated. This is in contrast with typical zero cross systems in which the phase is updated only at zero cross of the monitored AC input. For example, if the AC input voltage is provided at 800 Hz, the position estimate $\theta$ is updated at a frequency of 1600 Hz (representing two zero-cross events during each cycle). In the present invention, the phase estimate $\theta$ may be updated at a sampling rate much greater than that of the AC input voltage (e.g., 100 KHz). The higher sampling rate decreases the error in the position estimate and thereby reduces harmonics in the active rectifier, thereby reducing EMI. In addition, the sampling rate of the present invention may be selected based on the particular harmonics to be reduced. Therefore, the sampling rate may change based on the frequency of the AC input voltage or the particular harmonics to be minimized.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An active rectifier system comprising:

   an active rectifier (12) having a plurality of solid-state switching devices (51, 52, 53) that are turned On and Off to convert an alternating current (AC) input to a direct current (DC) output;
   a phase/frequency detector (18) that monitors AC input voltages provided to the active rectifier at a sampling rate greater than a frequency of the AC input voltage and calculates in response to the monitored AC input voltage a phase estimate associated with the monitored AC input voltage;
   a voltage regulator (24) that monitors the DC output of the active rectifier and generates in response an error signal representing a difference between the monitored DC output and a reference DC output;
   a current regulator (22) that receives the error signal calculated by the voltage regulator and monitors AC input currents provided to the active rectifier, and in response to the error signal and the monitored AC input currents generates voltage command instructions; and

a pulse width modulator (20) that calculates pulse width modulation (PWM) commands for each of the plurality of solid-state switching devices within the active rectifier based on the voltage command instructions provided by the current regulator and the phase information provided by the phase/frequency detector, wherein calculation of the PWM commands are synchronized with phase estimates calculated by the phase/frequency detector.

2.   The active rectifier system of claim 1, wherein the phase/frequency detector employs a phase-lock loop (PLL) algorithm with the sampled AC input voltage as an input to calculate phase and frequency estimates.

3.   The active rectifier system of claim 2, wherein the PLL algorithm implemented by the phase/frequency processor calculates a difference between monitored phase of the sampled AC input voltage and the current phase estimate based on the equation: $\sin(x - y) = \sin(x) * \cos(y) - \cos(x) * \sin(y)$.

4.   The active rectifier system of claim 3, wherein the phase/frequency detector converts the sampled AC input voltage from an *abc* reference frame to a $\alpha\beta$ reference frame

5.   The active rectifier system of claim 4, wherein the calculated difference between the monitored phase of the sampled AC input voltage and the current phase estimate is provided to a proportional-integral (PI) controller to generate an output that is added to the current phase estimate to generate a new phase estimate.

6.   The active rectifier system of claim 1, wherein the sampling rate of the phase/frequency detector is greater than a switching frequency of the solid-state switches in the active rectifier.

7.   The active rectifier system of claim 1, wherein the phase/frequency detector and the pulse width modulator are implemented on a first processor (16), and the current regulator and voltage regulator are implemented on a second processor (14) independent of the first processor.

8.   The active rectifier system of claim 1, wherein the sampling rate of the phase/frequency detector is independent of an update rate associated with PWM commands provided by the pulse width modulator.

9.   A method controlling an active rectifier, the method comprising:

receiving alternating current (AC) input voltage provided at a selected sample rate at a phase/frequency detector, wherein the selected sample rate is greater than a frequency of the AC input voltage;

calculating at the phase/frequency detector phase and frequency information based on the sampled AC input voltage, wherein the phase and frequency information is updated with each received sample of the AC input voltage;

calculating at a voltage regulator a difference signal between a monitored DC output of the active rectifier and a reference voltage;

calculating at a current regulator a voltage control signal that is based on the calculated difference signal, monitored AC input currents, and calculated phase and frequency information; and

converting at a pulse width modulator the calculated voltage control signal to pulse width modulation (PWM) signals based on calculated phase information, wherein calculation of the pulse width modulation signals is synchronized with calculation of phase and frequency information by the phase/frequency detector.

10.   The method of claim 9, wherein calculating the phase and frequency information based on the sampled AC input voltage includes:

converting the monitored AC input voltage from an *abc* reference frame to an $\alpha\beta$ reference frame that includes an $\alpha$ value and a $\beta$ value,

calculating a difference between monitored phase of the sampled AC input voltage and the current phase estimate based on the equation: $\sin(x - y) = \sin(x) * \cos(y) - \cos(x) * \sin(y)$, wherein x equals the monitored phase of the sampled AC voltage and y equals the most recent phase estimate; and

modifying the most recent phase estimate based on the calculated difference between the monitored phase of the sampled AC input and the most recent phase estimate to generate a new phase estimate.

11.   The method of claim 9, wherein the selected sample rate is greater than the frequency of the monitored AC input voltage.

**12.** The method of claim 9, wherein the selected sample rate is greater than a frequency associated with the PWM control signals provided to the active rectifier.

**13.** The method of claim 9, wherein the sample rate of the phase/frequency detector is independent of an update rate associated with PWM signals calculated by the pulse width modulator.

**14.** A controller for an active rectifier having a plurality of solid-state switching devices for converting an AC input voltage to a DC output voltage, the controller comprising:

a phase/frequency detector that monitors the AC input voltage provided to the active rectifier at a sampling rate greater than a frequency of the AC input voltage and calculates in response to the monitored AC input voltage a current phase estimate associated with the monitored AC input voltage that is updated at the sampling rate;

a voltage regulator that monitors the DC output of the active rectifier and generates in response an error signal representing a difference between the monitored DC output and a reference DC output;

a current regulator that receives the error signal calculated by the voltage regulator and monitors AC input currents provided to the active rectifier, and in response to the error signal and the monitored AC input currents generates command instructions; and

a pulse width modulator that calculates pulse width modulation (PWM) commands for each of the plurality of solid-state switching devices within the active rectifier based on the command instructions provided by the current regulator and the phase information provided by the phase/frequency detector, wherein calculation of PWM commands is synchronized with calculation by the phase/frequency detector of the current phase estimate.

Fig. 1

Fig. 2